# FASCICULE DE BREVET EUROPEEN

(11) **EP 0 704 336 B1**
(45) Date de publication et mention de la délivrance du brevet: **10.12.1997**
(21) Numéro de dépôt: 95420261.0
(22) Date de dépôt: 22.09.1995
(51) Int. Cl.: B60K 20/04

(54) **Support de levier de commande de boîte de vitesse pour véhicules automobiles**
Halterung des Getriebeschalthebels eines Kraftfahrzeuges
Support of a gear shift lever for a motor vehicle

(30) Priorité: 30.09.1994 FR 9412023
(43) Date de publication de la demande: 03.04.1996
(73) Titulaire: ADWEST OCI SA, 42350 La Talaudière (FR)
(72) Inventeur: Tholly, Paul, F-42170 Saint Just Saint Rambert (FR)
(74) Mandataire: Thivillier, Patrick

(56) Documents cités:
- FR-A- 2 395 856
- US-A- 4 711 135
- US-A- 5 144 852

## Description

L'invention se rattache au secteur technique des équipements pour véhicules automobiles.

D'une manière parfaitement connue, un levier de commande de boîte de vitesses est monté avec capacité de déplacement angulaire, dans un support fixé sur le plancher du véhicule automobile. Notamment, le support présente un agencement pour l'accouplement d'une tête sphérique que présente le levier de commande.

Actuellement, la fixation de ce support, s'effectue au moyen d'une platine métallique rapportée, disposée sous le plancher du véhicule. Cette platine reçoit, à chacun de ses angles, des vis, dont les têtes sont rendues solidaires de ladite platine. Ces vis traversent le plancher, et sont engagées dans des trous débouchants formés dans l'épaisseur d'une semelle d'appui, que présente le support. Des écrous, coopérant avec les vis, assurent l'assemblage définitif du support par rapport à la platine.

A noter également que la platine, peut, dans certains cas, permettre l'accrochage d'un soufflet d'étanchéité, qui recouvre le support, en étant raccordé au levier de commande.

La fixation du support s'effectue donc au moyen d'une platine rapportée. Or, cette platine nécessite un revêtement extérieur spécial, afin d'éviter les risques de corrosion. Il en résulte des opérations spécifiques de traitement et par conséquent, un coût non négligeable.

De même, il n'est pas toujours aisé de respecter les tolérances d'équerrage des vis, par rapport à la platine.

L'invention s'est fixée pour but de remédier à ces inconvénients, de manière simple, sûre, efficace et rationnelle.

Le problème que se propose de résoudre l'invention, est de simplifier, d'une manière importante, la fixation du support, en supprimant la platine.

Pour résoudre un tel problème, il a été conçu et mis au point un nouveau type de support de levier de commande de boîte de vitesses présentant une semelle d'appui et une partie apte à recevoir avec capacité d'orientation angulaire le levier, ladite semelle étant agencée pour recevoir directement lors du moulage de l'ensemble du support des organes de fixation dont les portées filetées apparaissent verticalement en débordement de ladite semelle pour coopérer avec des organes de serrage complémentaires.

Avantageusement, les organes de fixation sont des vis dont les têtes sont noyées dans des bossages de la semelle, lesdites têtes présentant des agencements aptes à éviter que le couple de serrage ne les désolidarise de la semelle.

Pour résoudre le problème posé de pouvoir équiper le support d'un soufflet d'étanchéité, la semlle présente directement, lors du moulage, un bourrelet apte à assurer le maintien d'un soufflet de protection.

L'invention est exposée, ci-après plus en détail à l'aide des dessins annexés, dans lesquels :

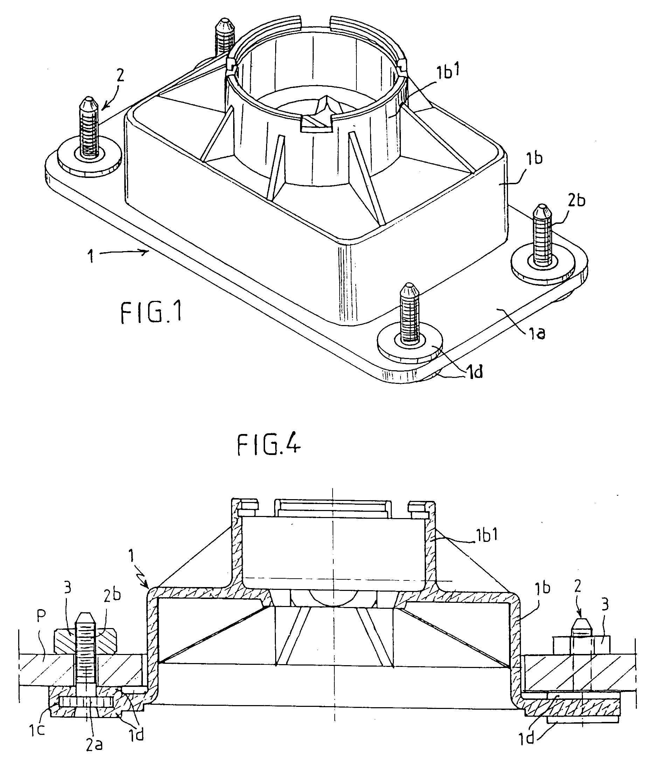

La figure 1 est une vue en perspective du support.

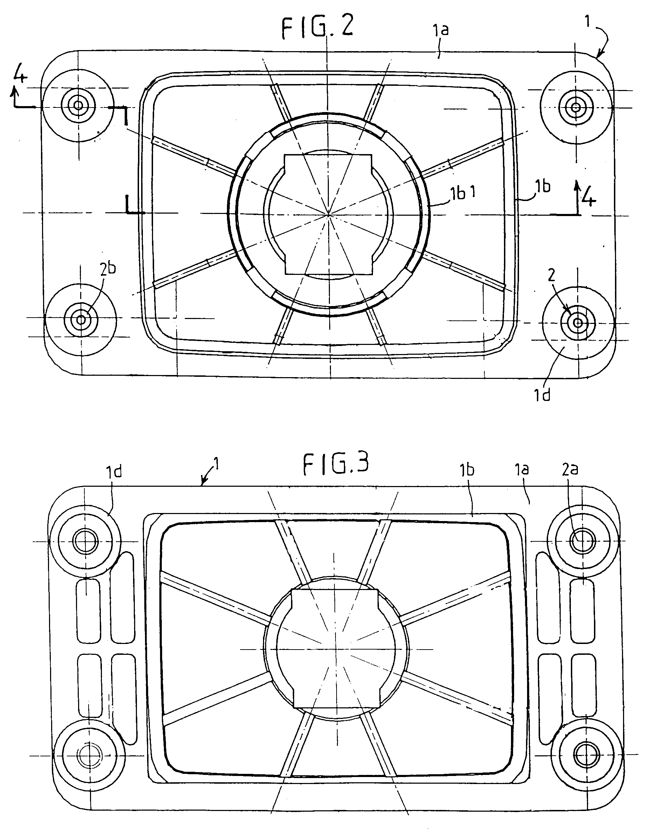

La figure 2 est une vue de dessus du support.
La figure 3 est une vue de dessous du support.
La figure 4 est une vue en coupe longitudinale considérée selon la ligne 4.4 de la figure 2, montrant la fixation du support.

Le support désigné dans son ensemble par (1), est obtenu par moulage d'une matière plastique et présente une semelle d'appui (1a) et une partie (1b) agencée pour recevoir, avec capacité d'orientation angulaire, le levier de commande de la boîte de vitesses. Plus particulièrement, la partie (1b) présente, d'une manière connue, une tête (1b1) dans laquelle est montée la sphère d'articulation, que présente le levier (non représenté).

Selon une caractéristique à la base de l'invention, la semelle (1a) est agencée pour recevoir directement, lors du moulage de l'ensemble support (1), des organes de fixation (2). Ces organes sont positionnés dans le fond du moule, de manière à apparaître en débordement de chacun des angles de la semelle.

Les organes de fixation se présentent sous la forme de vis, dont les têtes (2a) sont noyées dans des empreintes (1c) que présentent des bossages (1d) formés en débordement de la face de dessous de la semelle (1a). Les têtes (2a) sont moletées pour assurer un ancrage sûr et efficace de la vis (2), dans l'empreinte correspondante (1c).

A noter qu'avantageusement, ces têtes de vis (2a) sont d'un diamètre supérieur à celui généralement admis.

Les portées filetées (2b) des vis (2) apparaissent verticalement en débordement de la semelle (1a). Notamment, ces portées sont positionnées dans un plan strictement perpendiculaire à la semelle (1a).

Des écrous (3), ou autres organes de serrage, coopèrent avec les vis (2) pour assurer la fixation de l'ensemble du support, au niveau du plancher (P) du véhicule notamment. Dans ce but, la partie (1b) du support est engagée dans une ouverture correspondante du plancher ou autre, tandis que la semelle (1a) est en appui de part et d'autre de ladite ouverture. Les vis (2) traversent le plancher ou autre, pour recevoir les écrous (3).

A noter que le support (1), notamment la semelle (1a) présente directement, lors du moulage, un agencement, tel qu'un bourrelet, apte à assurer le maintien d'un soufflet de protection.

Les avantages ressortent bien de la description, en particulier on souligne et on rappelle :
- la suppression de la platine de fixation,
- la suppression de toutes parties métalliques susceptibles de s'oxyder,
- le gain de poids,
- la parfaite perpendicularité des vis par rapport à la semelle d'appui, compte-tenu d'un positionnement directement lors du moulage du support,
- la diminution des coûts.

## Revendications

1. Support de levier de commande de boîte de vitesse pour véhicules automobiles, présentant une semelle d'appui (1a) et une partie (1b) apte à recevoir avec capacité d'orientation angulaire le levier, caractérisé en ce que la semelle (1a) est agencée pour recevoir directement lors du moulage de l'ensemble du support (1) des organes de fixation (2) dont les portées filetées (2b) apparaissent verticalement en débordement de ladite semelle pour coopérer avec des organes de serrage complémentaires (3).

2. Support selon la revendication 1, caractérisé en ce que les organes de fixation sont des vis (2) dont les têtes (2a) sont noyées dans des bossages de la semelle, lesdites têtes présentant des agencements aptes à éviter que le couple de serrage ne les désolidarise de la semelle.

3. Support selon la revendication 2, caractérisé en ce que les agencements des têtes de vis (2a) sont constitués par un moletage.

4. Support selon la revendication 1, caractérisé en ce que la semelle (1a) présente directement lors du moulage, un bourrelet apte à assurer le maintien d'un soufflet de protection.

## Claims

1. Mounting for a motor vehicle gearbox gearshift lever having a support base (1a) and a part (1b) suitable to accommodate the gearshift lever with the capacity of angular swivelling characterised in that the base (1a) is devised to accommodate, when the integral mounting (1) is moulded, fixing devices (2) of which the threaded posts (2b) project vertically from said base in order to co-operate with matching tightening features (3).

2. Mounting as claimed in claim 1 characterised in that the fixing features are screws (2) of which the heads (2a) are concealed in bumps on the base, said heads having features designed to prevent the tightening torque from detaching them from the base.

3. Mounting as claimed in claim 2 characterised in that the features of the screw heads (2a) consist of knurling.

4. Mounting as claimed in claim 1 characterised in that the base (1a) has an integral moulded bead designed to ensure the attachment of a protective boot.

## Patentansprüche

1. Schalthebelsockel für Kraftfahrzeuge mit einer Auflageplatte (1a) und einem Sockelteil (1b), das für die winkelverstellbare Aufnahme des Hebels geeignet ist, dadurch gekennzeichnet, daß die Sohlplatte (1a) so ausgebildet ist, daß sie direkt beim Formen des gesamten Sockels (1) Befestigungsorgane (2) erhält, deren Gewindeflächen (2b) senkrecht aus der Sohlplatte herausragen, um mit ergänzenden Aufspannsystemen (3) zusammenzuwirken.

2. Sockelteil nach Anspruch 1, dadurch gekennzeichnet, daß die Befestigungsorgane aus Schrauben (2) bestehen, deren Köpfe (2a) in Auswölbungen der Sohlplatte vergossen sind, wobei diese Köpfe Vorkehrungen aufweisen, die verhindern, daß sie durch das Drehmoment von der Sohlplatte getrennt werden.

3. Sockelteil nach Anspruch 2, dadurch gekennzeichnet, daß die Vorkehrungen der Schraubenköpfe (2a) aus einer Rändelung bestehen.

4. Sockelteil nach Anspruch 1, dadurch gekennzeichnet, daß die Sohlplatte (1a) direkt beim Formen einen Wulst aufweist, der geeignet ist, die Aufrechterhaltung eines Schutzbalgs zu gewährleisten.
